# EUROPÄISCHE PATENTANMELDUNG

(11) **EP 2 706 001 A1**
(43) Veröffentlichungstag der Anmeldung: **12.03.2014**
(21) Anmeldenummer: 13195778.9
(22) Anmeldetag: 15.03.2013
(51) Int. Cl.: B62K 11/14, B62M 6/45, B62K 23/02, H01H 19/00, H01H 21/02, H01H 23/24

(54) **Fahrradgriffsystem**

(30) Priorität: 02.07.2012 DE 202012006313 U; 21.08.2012 DE 202012007991 U; 22.12.2012 DE 202012012338 U
(62) Teilanmeldung aus: 13159318.8
(71) Anmelder: RTI Sports Vertrieb von Sportartikeln GmbH, 56070 Koblenz (DE)
(72) Erfinder: Franc Arnold, 56068 Koblenz (DE)
(74) Vertreter: von Kreisler Selting Werner

(57) **Zusammenfassung**

Ein Fahrradgriffsystem weist ein auf einem Fahrradlenker befestigbares Griffelement (110) auf. Seitlich neben dem Griffelement (110) ist ein Bedienelement (118) angeordnet. In das Bedienelement (118) ist mindestens ein elektrischer Schalter (122) zum Steuern eines elektrischen Unterstützungsmotors für das Fahrrad angeordnet. Das Bedienelement weist ein auf einem Lagerelement (124) drehbar angeordnetes Betätigungselement (118) auf, das vorzugsweise als ringförmiger Drehschalter ausgebildet ist.

## Beschreibung

Die Erfindung betrifft ein Fahrradgriffsystem zur Befestigung an einem Fahrradlenker.

Bei Fahrrädern mit einem elektrischen Hilfsmotor sind am Lenker Bedienelemente zum Steuern des Elektromotors angeordnet. Diese Bedienelemente sind beispielsweise klemmend am Lenker befestigt. Da es sich um Bedienelemente handelt, die unabhängig von dem Griff sind, können diese seitlich neben einem herkömmlichen Fahrradgriff an dem Lenker befestigt werden. Derartige Bedienelemente weisen den Nachteil auf, dass zur Bedienung häufig die Hand vom Fahrradgriff gelöst werden muss. Zumindest ein teilweises Lösen ist erforderlich, um beispielsweise mit dem Daumen einen Schalter an dem Bedienelement zu betätigen. Hierdurch ist die Sicherheit verringert, da beispielsweise beim Überfahren einer Bodenwelle oder dergleichen die Gefahr besteht, dass die Hand vom Lenker abrutscht. Auch ist die Ergonomie derartiger Bedienelemente nicht oder nur geringfügig auf die Handhaltung des Benutzers während des Fahrradfahrens abgestimmt.

Aufgabe der Erfindung ist es, ein Fahrradgriffsystem zu schaffen, bei dem das Bedienelement mit mindestens einem elektrischen Schalter zum Steuern eines elektrischen Unterstützungsmotors einfach betätigbar ist.

Die Lösung der Aufgabe erfolgt erfindungsgemäß durch die Merkmale des Anspruchs 1.

Das erfindungsgemäße Fahrradgriffsystem weist gemäß einer ersten Ausführungsform ein in Längsrichtung kurzes Griffelement auf. Das auf dem Lenker befestigbare Griffelement weist eine sich in Längsrichtung, d.h. parallel zum Lenker erstreckende Griffbreite von weniger als 110 mm, insbesondere weniger als 100 mm und besonders bevorzugt weniger als 90 mm auf. Durch Verwenden eines derartigen kurzen Griffelements ist es möglich, ein Bedienelement, in dem mindestens ein elektrischer Schalter zum Steuern des elektrischen Unterstützungsmotors angeordnet ist, nicht nur unmittelbar neben dem Griffelement anzuordnen, sondern auch in einer gut zugänglichen Position anzuordnen. Durch die Anordnung des Bedienelements und somit des mindestens einen elektrischen Schalters unmittelbar neben einem kurzen Griffelement ist es möglich, den mindestens einen elektrischen Schalter zu betätigen, ohne die Hand vom Fahrradgriff, d.h. vom Griffelement zu lösen. Hierdurch sind der Bedienkomfort sowie auch die Sicherheit erhöht.

Besonders bevorzugt ist es, dass das Bedienelement einen äußeren Querschnitt aufweist, der im Bereich der aneinander angrenzenden Bereiche dem äußeren Querschnitt des Griffelements entspricht. Es kann somit ein zumindest im Wesentlichen stufenfreier Übergang zwischen der Außenseite bzw. Umfangsfläche des Griffelements und der Außenseite bzw. Umfangsfläche des Bedienelements realisiert werden. Dies hat den Vorteil, dass beispielsweise beim Betätigen des elektrischen Schalters der Daumen zur Betätigung nur nach innen in Richtung des Bedienelements verschoben werden muss und hierbei nicht ein Lösen oder Anheben des Daumens zum Überwinden einer Stufe erforderlich ist. Des Weiteren weist ein stufenloser Übergang zwischen der Außenseite des Griffelements und des Bedienelements den Vorteil auf, dass beispielsweise beim Greifen des Griffelements in einer Position, in der die Hand auch das Bedienelement geringfügig überdeckt, keine störende Kante vorgesehen ist. Eine derartige Kante wäre für den Benutzer unangenehm und würde beispielsweise Druckstellen hervorrufen.

Das Bedienelement stellt in unterschiedlichen bevorzugten Ausführungsformen eine selbständige Erfindung dar, die unabhängig von der Länge des auf dem Lenker neben dem Bedienelement angeordneten Griffelements ist.

In besonders bevorzugter Ausführungsform ist das Bedienelement ringförmig ausgebildet und umgibt somit vorzugsweise den Lenker vollständig. Das Bedienelement, das vorzugsweise einen im Wesentlichen zylindrischen Durchmesser aufweist, kann beispielsweise klemmend, durch Vorsehen einer Schelle oder dergleichen am Lenker befestigt werden. Ein im Wesentlichen einen zylindrischen Querschnitt aufweisendes Bedienelement weist hierbei einen Durchmesser auf, der im Wesentlichen dem Durchmesser des Griffelements an der Innenseite, d.h. an den aneinander angrenzenden Bereichen zwischen Griffelement und Bedienelement aufweist.

Das Bedienelement weist vorzugsweise mehrere elektrische Schalter zum Steuern des elektrischen Unterstützungsmotors des Fahrrads auf. Zusätzlich zu den elektrischen Schaltern ist es möglich, einen Teil der Steuerelektronik für den Unterstützungsmotor in dem Bedienelement zu integrieren. Insbesondere ist es aufgrund der Möglichkeit Steuerelektroniken mit sehr kleinem Bauraum zu verwenden möglich, die gesamte Steuerelekronik für den Unterstützungsmotor in dem Bedienelement zu integrieren. Dies hat den Vorteil, dass eine einfachere Kommunikation zwischen den Schaltern und der Steuerelektronik gewährleistet ist. Die Verbindung von der Steuerelektronik zu dem Motor kann sodann Kabelgebunden erfolgen.

Des Weiteren ist es möglich, in dem Bedienelement ein Sende-/ Empfangselement zur drahtlosen Datenübertragung vorzusehen. Hierbei kann die Steuerelektronik außerhalb des Bedienelements, insbesondere nahe des Unterstützungsmotors vorgesehen sein, so dass die Steuersignale, beispielsweise das Erhöhen oder Erniedrigen der Drehzahl und das Ein- oder Ausschalten des Motors von dem Bedienelement über das Sende-/ Empfangselement drahtlos über die Steuerelektronik übermittelt werden. Ebenso kann die Steuerelektronik zumindest teilweise zusätzlich zu dem Sende-/ Empfangselement in dem Bedienelement angeordnet sein.

Eine drahtlose Datenübertragung mit Hilfe des Sendeempfangselements kann an den zu steuernden Unterstützungsmotor bzw. an die Steuerelektronik des Unterstützungsmotors erfolgen. Ferner ist es auch möglich, eine drahtlose Datenübertragung zu einem Fahrradcomputer oder einem Display zu realisieren. Hierbei kann als Fahrradcomputer ein Smartphone oder dergleichen verwenden werden. Ein Fahrradcomputer oder ein Smartphone können hierbei über eine geeignete Halterung, beispielsweise unmittelbar am Lenker angeordnet sein. Über eine Taste zur Menüsteuerung, die vorzugsweise ebenfalls in das Bedienelement integriert ist, kann auf dem Display, beispielsweise der Ladezustand eines Akkus des Unterstützungsmotors, die aktuelle Unterstützungsstufe und des Weiteren übliche Anzeigen eines Fahrradcomputers angezeigt und gesteuert werden.

Durch die Integration der Steuerelektronik und gegebenenfalls eines Sende-/ Empfangselements in das Bedienelement können die Kosten deutlich reduziert werden.

Vorzugsweise ist zumindest einer der elektrischen Schalter als Wippenschalter ausgebildet. Besonders geeignet ist das Vorsehen eines Wippenschalters, z. B. bei einem Erhöhen oder Erniedrigen der Unterstützung durch den Elektromotor. Insbesondere kann durch mehrfaches Drücken desselben Schalters oder des Wippenschalters in dieselbe Richtung, beispielsweise ein mehrfaches Erhöhen der Unterstützungsstufe eines Elektromotors erfolgen. Ebenso kann ein stufenweises Erniedrigen durch Drücken eines anderen Schalters oder des anderen Wippenelements erfolgen. Das Erhöhen oder Erniedrigen der Unterstützung durch den Elektromotor kann auch stufenlos erfolgen, so dass die Erhöhung abhängig ist von der Zeitspanne, die ein entsprechender Schalter gedrückt wird. Als weiterer Schalter in dem Bedienelement kann ein Tastschalter, beispielsweise zum Einstellen unterschiedlicher Modi vorgesehen sein. Hierbei ist es bevorzugt, dass das Bedienelement mit einem integrierten Display versehen oder einem externen Display verbunden ist. Als externes Display kann hierbei auch das Display eines Fahrradcomputers, elektronischen Tachometers, eines Smartphones etc. genutzt werden. Über die Mode-Funktion können beispielsweise Einstellungen wie übliche Tachomodi (Strecke, Geschwindigkeit, Durchschnittswerte etc.) oder Modi der Motorsteuerung erfolgen. Als Modus der Motorsteuerung kann beispielsweise eine Steuerung "Stadt" oder "Überland" ausgewählt werden. Bei dem Stadt-Modus erfolgt beispielsweise aus Sicherheitsgründen ein langsameres Beschleunigen. In besonders bevorzugter Ausführungsform weist das Bedienelement neben dem Wippenschalter zumindest drei weitere Schalter auf. Ein Schalter dient zur Steuerung eines Menüs eines Fahrradcomputers, ein weiterer Schalter dient zum Betätigen des Lichts und ein dritter Schalter dient als Hauptschalter zum An- und Ausschalten sämtlicher Funktionen.

Bei einer besonders bevorzugten Ausführungsform des Wippenschalters weist dieser zwei Wippenstege auf. Der Finger, üblicherweise der Daumen, mit dem der Wippenschalter betätigt wird, kann in einer zwischen den beiden Wippenstegen vorgesehenen Schaltmulde angeordnet werden. Vorzugsweise ist der Abstand der beiden Wippenstege hierbei derart gewählt, dass Daumen unterschiedlicher Größe hierin angeordnet werden können. Beispielsweise erfolgt das Schalten bei einer kleinen Hand über den Bereich der Fingerkuppe des Daumens und bei einer größeren Hand über den Bereich des Daumengelenks.

In der Schaltmulde des Wippenschalters kann ein Tastschalter angeordnet ist. Dieser kann beispielsweise zum Auswählen unterschiedlicher Modi oder als Bestätigungstaste genutzt werden. Das Anordnen eines Tastschalters in der Schaltmulde hat den Vorteil, dass der Daumen sowohl zum Betätigen des Wippenschalters als auch zum Betätigen des Tastschalters nicht versetzt werden muss. Der Benutzer hat somit den Fahrradgriff bei jeder Schaltfunktion fest in der Hand. Sowohl das Betätigen des Wippenschalters als auch des in der Schaltmulde angeordneten Tastschalters erfolgt intuitiv. Der Benutzer muss seinen Blick nicht auf den Fahrradgriff wenden, um einen Tastschalter zu betätigen. Hierdurch ist die Sicherheit erheblich verbessert.

Ebenso ist es möglich, keinen zusätzlichen Tastschalter innerhalb des Wippenschalters vorzusehen, um beispielsweise beim Betätigen des Wippenschalters ein unbeabsichtigtes Betätigen des Tastschalters zu vermeiden. Bevorzugt ist es, einen Schalter, insbesondere denjenigen Schalter mit dem beispielsweise die Menüfunktionen gesteuert werden können, möglichst gut zugänglich vorzusehen, wobei dieser Schalter insbesondere auf einfache Weise durch den Daumen betätigbar sein soll. Hierbei ist es bevorzugt, einen elektrischen Schalter an einer Oberseite eines Wippenstegs vorzusehen. Dies hat den Vorteil, dass der Daumen, mit dem der Wippenschalter betätigt wird, nur geringfügig aus der Schaltmulde verschoben werden muss, um diesen elektrischen Schalter betätigen zu können.

Des Weiteren ist es bevorzugt, dass ein an einer Oberseite eines Wippenstegs angeordneter elektrischer Schalter derart angeordnet, bzw. der Wippensteg derart ausgebildet ist, dass beim Betätigen dieses Schalters ein gleichzeitiges Betätigen der Wippe vermieden ist. Dies ist vorzugsweise dadurch erreicht, dass eine Betätigungsrichtung dieses auf dem Wippensteg angeordneten Schalters im wesentlichen radial verläuft. Bei einer nicht seitlich geneigten sondern parallel zur Längsachse des Fahrradgriffs verlaufenden Oberseite dieses Schalters verläuft die Betätigungsrichtung somit vorzugsweise radial zur Längsrichtung des Fahrradgriffs, wenn die Schwenkachse des Wippenstegs auf der Mittellinie des Fahrradgriffs angeordnet ist bzw. dieser entspricht oder zu dieser parallel ist. In allgemeiner Form verläuft somit die Betätigungsrichtung vorzugsweise radial zu der Schwenkachse des Wippenschalters. Durch ein Betätigen des Schalters kann somit mit hoher Sicherheit ein Betätigen des Wippenschalters vermieden werden. Die Anordnung oder Ausgestaltung dieses Betätigungsschalters stellt eine selbständige Erfindung dar, die insbesondere unabhängig von der Länge des Fahrradgriffs und von den ferner beschriebenen bevorzugten Ausführungsformen des Bedienelements ist.

Bei einer weiteren bevorzugten Ausführungsform der Erfindung ist mindestens ein elektrischer Schalter geneigt angeordnet, so dass eine Betätigungsoberfläche des Schalters in Richtung des Griffelements geneigt ist. Hierdurch ist dieser elektrische Schalter insbesondere bei einer Betätigung durch den Daumen, leichter zugänglich. Bei diesem elektrischen Schalter kann es sich insbesondere um den vorstehend beschriebenen, auf einem Wippensteg angeordneten Schalter handeln. Auch diese Erfindung stellt eine unabhängige Erfindung dar, die insbesondere von der Griffbreite des Griffelements unabhängig ist.

Ein beispielsweise als Tastschalter in dem Bedienelement angeordneter Schalter ist vorzugsweise derart ausgebildet, dass eine Außenseite des Schalters im Wesentlichen stufenlos zu der Außenseite des Bedienelements ist. Durch eine derartige Integration des Schalters in das Bedienelement kann die Ergonomie weiter verbessert werden.

Bei einer weiteren bevorzugten Ausführungsform der Erfindung weist das Bedienelement anstelle oder zusätzlich zu einem oder mehreren Tast- und/ oder Wippenschaltern einen Drehschalter auf. Ein derartiger, insbesondere ringförmig ausgebildeter Drehschalter bewirkt durch Drehen in die eine bzw. die andere Richtung ein Schalten. Hierbei kann es sich beispielsweise um ein Verstärken oder ein Verringern der durch den Elektromotor erfolgenden Unterstützung handeln. Hierbei ist es besonders bevorzugt, dass der Drehschalter eine oder mehrere Schaltmulden aufweist. Derartige konkave Vertiefungen weisen vorzugsweise eine Größe auf, dass insbesondere der Daumen in der Schaltmulde angeordnet werden kann. Hierdurch ist ein einfaches Betätigen des Drehschalters möglich.

Ein derartiger Drehschalter kann Stege entsprechend der Wippenstege aufweisen, so dass der Drehschalter eine entsprechende Schaltmulde ausbildet. Hierbei ist es sodann wiederum besonders bevorzugt, dass unabhängig von der Griffbreite des Griffelements an der Oberseite der entsprechenden Stege ein elektrischer Schalter wie vorstehend anhand des Wippenschalters beschrieben, angeordnet ist. Insbesondere in Kombination mit dieser Ausführungsform ist auch eine geneigte Anordnung der Betätigungsfläche in Richtung des Greifelements bevorzugt.

Gemäß einer weiteren selbständigen Erfindung weist das erfindungsgemäße Fahrradgriffsystem ein Griffelement auf, das an bzw. auf einem Fahrradlenker befestigbar ist. Insbesondere seitlich neben dem gegebenenfalls etwas kürzer als herkömmliche Griffe ausgebildete Griffelement ist erfindungsgemäß ein Bedienelement zum Bedienen eines elektrischen Unterstützungsmotors des Fahrrads angeordnet. Das Bedienelement ist in montiertem Zustand vorzugsweise innerhalb des Griffelements angeordnet, so dass vorzugsweise, ohne die Hand von dem Griffelement lösen zu müssen, ein Betätigen des Bedienelements insbesondere mit dem Daumen möglich ist. Durch das Bedienelement ist ein Verändern der Unterstützungsleistung des Unterstützungsmotors möglich. Vorzugsweise weist das Bedienelement ein Betätigungselement auf. Bei dem Betätigungselement handelt es sich vorzugsweise um einen Wippen- oder Drehschalter, wie er vorstehend anhand einer weiteren bevorzugten Ausführungsform der Erfindung beschrieben ist. Das Betätigungselement ist mit einem Lagerelement drehbar verbunden. Bspw. kann das Lagerelement hülsenförmig ausgebildet sein bzw. einen hülsenförmigen Ansatz aufweisen und auf dem Fahrradlenker mittelbar oder unmittelbar fixiert sein. Das Betätigungselement ist sodann auf dem Lagerelement drehbar. Durch ein Verdrehen des Betätigungselements auf oder in dem Lagerelement, d. h. durch ein Verdrehen des Betätigungselements relativ zu dem Lagerelement erfolgt ein Betätigen des elektrischen Schaltelements.

Dies ist erfindungsgemäß dadurch realisiert, dass in einer ersten, besonders bevorzugten Ausführungsform ein Schaltansatz an dem Betätigungselement vorgesehen ist. Durch Verdrehen des Betätigungselements relativ zu dem Lagerelement wirkt der mindestens eine Schaltansatz auf das mindestens eine elektrische Schaltelement ein. Dasselbe erfindungsgemäße Prinzip kann dadurch realisiert werden, dass der mindestens eine Schaltansatz an dem Lagerelement oder insbesondere an dem am Lenker befestigten Halteelement angeordnet ist und das mindestens eine elektrische Schaltelement, auf das der mindestens eine Schalteinsatz einwirkt an dem Betätigungselement vorgesehen ist. Relevant ist die Relativbewegung zwischen dem mindestens einen Schaltansatz und dem entsprechend mindestens einen elektrischen Schaltelement, wobei durch die Relativbewegung ein Schalten erfolgt. Erfindungsgemäß kann somit durch ein einfaches Drehen des Bedienelements um einen vorgegebenen Winkel bzw. ein Verschwenken des Bedienelements der elektrische Unterstützungsmotor hinsichtlich der Unterstützungsleistung gesteuert werden.

Bevorzugt ist es hierbei, dass das Bedienelement in zwei unterschiedliche Richtungen auf dem Lagerelement verdreht werden kann und hierdurch die Unterstützungsleistung des Unterstützungsmotors verringert oder erhöht wird. Vorzugsweise sind hierzu zwei elektrische Schaltelemente vorgesehen, wobei das eine Schaltelement zum Erhöhen und das andere Schaltelement zum Erniedrigen der Unterstützungsleistung dient. Auf die beiden elektrischen Schaltelemente können ein Schaltansatz oder auch zwei gesonderte Schaltansätze einwirken.

Das Halteelement, das in einer alternativen Ausführungsform mit dem mindestens einen Schaltansatz verbunden ist, kann Zusatzfunktionen aufweisen. Beispielsweise kann das Halteelement als Klemmelement ausgebildet sein und zur Fixierung des Lagerelements auf dem Lenker dienen.

In einer besonders bevorzugten Weiterbildung der Erfindung weist das Bedienelement ein Gleitelement auf, das drehbar auf dem Lagerelement angeordnet ist. Das Gleitelement bildet zusammen mit dem Lagerelement in dieser Ausführungsform ein Gleitlager. Alternativ können zwischen diesen beiden Elementen auch Wälzkörper wie Kugeln angeordnet sein. Besonders bevorzugt ist, dass das Lagerelement einen zylindrischen Innendurchmesser aufweist, der im Wesentlichen dem Außendurchmesser des Fahrradlenkers entspricht, so dass das Lagerelement auf einfache Weise auf dem Fahrradlenker beispielsweise mit Hilfe eines Klemmmittels wie einer Schelle oder dergleichen fixiert werden kann. Das Fixieren des Lagerelements kann auch durch Verbindung mit dem Griffelement, das sodann auf dem Fahrradlenker fixiert ist, erfolgen. Eine bevorzugte Ausführungsform der die Gleitfläche bildende Außenseite des Lagerelements ist vorzugsweise ebenfalls im Wesentlichen zylindrisch ausgebildet. Entsprechend ist es auch bevorzugt, dass das Gleitelement eine im Wesentlichen zylindrische in Richtung des Lagerelements weisende Innenseite aufweist. Bevorzugt ist es hierbei, dass das Gleitelement einstückig mit dem Bedienelement ausgebildet, insbesondere als Spritzgussteil ausgeführt ist.

Unabhängig von der Art des an dem Bedienelement vorgesehenen Schaltertyps ist es bevorzugt, dass mindestens ein Schalter, insbesondere der die Hauptschaltfunktionen realisierende Hauptschalter an einer Rückseite des Bedienelements angeordnet ist. Die Rückseite des Bedienelements ist hierbei die in montiertem Zustand dem Benutzer zugewandte Seite des Bedienelements. Eine derartige Anordnung des Hauptschalters weist den besonderen Vorteil auf, dass dieser insbesondere durch den Daumen auf einfache Weise betätigbar ist, ohne die Hand vom Griffelement lösen zu müssen. Ferner kann hierdurch eine ergonomische Handhaltung beibehalten werden.

Bei einer weiteren bevorzugten Ausführungsform des erfindungsgemäßen Fahrradgriffsystems ist an dem Griffelement und an dem Bedienelement jeweils mindestens ein Positionselement vorgesehen. Die Positionselemente wirken miteinander zusammen, so dass das Bedienelement relativ zu dem Griffelement in einer oder mehreren unterschiedlichen Positionen zu einander angeordnet werden kann. Dies ist insbesondere dann vorteilhaft, wenn es sich bei dem Griffelement nicht um ein im Wesentlichen zylindrisches Griffelement handelt. Als Griffelement ist beispielsweise ein Griffelement mit einem flügelförmigen Ansatz vorgesehen, der als Abstützelement für den Handballen dient. Es ist zweckmäßig ein derartiges Griffelement derart am Lenker zu fixieren, dass der flügelförmige Ansatz im Wesentlichen horizontal ausgerichtet ist. Es ist sodann zweckmäßig, dass das Bedienelement in einer ergonomisch sinnvollen Position angeordnet ist. Das aus ergonomischen Gründen im Wesentlichen horizontal ausgerichtete Abstützelement für den Handballen definiert die Lage des Griffs am Fahrradlenker. Durch Vorsehen entsprechender Positionselemente ist sodann die relative Position des Bedienelements zum Fahrradgriff festgelegt. Durch das Vorsehen entsprechender Positionselemente ist somit sichergestellt, dass das Bedienelement in einer ergonomisch sinnvollen Position, in der insbesondere ein einfaches Betätigen des Hauptschalters durch den Daumen erfolgt, angeordnet ist.

Des Weiteren ist es bevorzugt, das Bedienelement derart auszubilden, dass es sowohl in Verbindung mit einem insbesondere kurzen Griffelement auf der linken sowie auf der rechten Lenkerseite angeordnet werden kann. Sofern entsprechende Positionselemente vorgesehen sind, sind diese vorzugsweise derart ausgestaltet, dass die Positionierung des Bedienelements sowohl auf der linken als auch auf der rechten Lenkerseite möglich ist. Hierbei ist es wiederum bevorzugt, dass das Positionselement stets derart angeordnet ist, dass der Hauptfunktionsschalter an der Unterseite des Bedienelements vorgesehen ist. Insofern sind vorzugsweise Positionselemente vorgesehen, die ein Positionieren des Bedienelements in zwei zueinander um 180° verdrehten Positionen relativ zum linken bzw. rechten Griffelement zulassen.

Als Positionselemente ist es möglich, stiftförmige Ansätze an dem Griffelement vorzusehen, die in entsprechende zylindrische Öffnungen an dem Bedienelement eingreifen.

Da ein wesentlicher Aspekt der Erfindung in der Ergonomie des Fahrradgriffsystems besteht, ist es besonders bevorzugt, das Bedienelement mit einem ergonomischen Fahrradgriff zu kombinieren. Bei dem Griffelement handelt es sich daher in bevorzugter Ausführungsform um einen Fahrradgriff mit flügelförmigem, in Richtung des Körpers des Fahrradfahrers bzw. entgegen der Fahrtrichtung weisenden Ansatz. Dieser flügelförmige Ansatz dient zum Abstützen des Handballens. Um ein Verdrehen eines derartigen Griffelements zu vermeiden, ist es bevorzugt, dass dieser am Fahrradlenker klemmend befestigt ist. Hierzu weist das Griffelement vorzugsweise eine Innenhülse auf, die in einem beispielsweise geschlitzten oder den Lenker nicht vollständig umgebenden Klemmbereich klemmend auf dem Lenker fixiert werden kann. Um einen stufenfreien Übergang zwischen einem Klemmelement und dem Griffelement zu realisieren, ist das Abstützelement vorzugsweise mit einem in den Klemmbereich des Klemmelements ragenden Halteelement verbunden. Das Griffelement ist vorzugsweise in seiner Formgebung und Ausgestaltung wie in EP 1 537 014 und EP 1 712 460 beschrieben, ausgestaltet. Insbesondere bei einem derartig ausgebildeten Griffelement ist das Vorsehen von Positionierelementen zweckmäßig, um die Lage des Bedienelements zu dem Griffelement und somit insbesondere zu dem Abstützelement für den Handballen zu definieren.

Gegebenenfalls kann auch das Bedienelement derart ausgebildet sein, dass dies zusätzlich zur Fixierung des Griffelements dient. Hierbei kann das Bedienelement beispielsweise teilweise in einen Klemmbereich des Griffelements ragen, so dass auch das Griffelement klemmend durch das Bedienelement an dem Lenker befestigbar ist. Ferner kann eine Verbindung auch durch die Positionselemente erfolgen.

Insbesondere durch die erfindungsgemäße Kombination eines kurzen Griffelements mit einem Bedienelement ist ein geringer Platzbedarf für das Bedienelement realisiert. Insbesondere entspricht die Länge des Fahrradgriffsystems der Länge eines herkömmlichen Fahrradgriffs und liegt somit im Bereich von 120 bis 150 mm. Das Vorsehen von Positionselementen an dem Bedienelement stellt eine insbesondere von der Länge des Griffelements sowie auch von der sonstigen Ausgestaltung des Bedienelements unabhängige Erfindung dar.

In das Bedienelement kann ferner ein weiterer als Lichtschalter dienender Taster integriert sein.

Bei einer weiteren bevorzugten Ausführungsform des Bedienelements weist dieses ein insbesondere hohl ausgebildetes Gehäuse auf. Das Gehäuse ist mit einem beispielsweise ringförmigen, seitlich am Gehäuse angeordneten Gehäusedeckel verschlossen. Bevorzugt ist es hierbei, dass der Gehäusedeckel lösbar mit dem Gehäuse verbunden ist. Die Verbindung kann hierbei über Rastelemente, Schrauben oder dergleichen erfolgen. Auch diese Ausgestaltung des Bedienelements stellt eine insbesondere von der Art der Schalter und auch dem verwendeten Griffelement unabhängige Erfindung dar.

Bei einer weiteren bevorzugten Ausführungsform des Bedienelements, dass wiederum eine selbständige Erfindung darstellt, weist das Bedienelement in montiertem Zustand in dem unteren Bereich eine Öffnung zum Flüssigkeitsaustritt auf. Dies ist insofern vorteilhaft, da Flüssigkeit, die in das Bedienelement eintritt, selbständig wieder austritt und insofern ein Korrodieren oder Beschädigen von Bauteilen, die innerhalb des Bedienelements angeordnet sind, vermieden ist. Bevorzugt ist es hierbei, dass elektrische Bauteile, die innerhalb des Bedienelements angeordnet sind, unabhängig von dem Bedienelement flüssigkeitsdicht ausgestaltet sind. Das Eindringen von Feuchtigkeit in das Bedienelement kann somit nicht zu einer Beschädigung der Bauteile in dem Bedienelement führen. Dies hat den Vorteil, dass das Bedienelement selbst nicht dicht ausgebildet sein muss, wobei es dennoch bevorzugt ist, entsprechende Dichtelemente vorzusehen, um sicherzustellen, dass allenfalls geringe Mengen an Feuchtigkeit in das Bedienelement eindringen. In einer bevorzugten Weiterbildung sind mehrere Feuchtigkeitsaustrittsöffnungen vorgesehen, so dass bei unterschiedlicher Positionierung des Bedienelements an dem Fahrradlenker, beispielsweise mit Hilfe der vorstehend beschriebenen Positionselemente, stets eine Feuchtigkeitsaustrittsöffnung an der Unterseite angeordnet ist. Hierdurch ist in unterschiedlichen Anordnungen des Bedienelements auf dem Lenker ein sicherer Feuchtigkeitsaustritt gewährleistet. Die Größe der mindestens einen Feuchtigkeitsaustrittsöffnung ist hierbei derart gewählt, dass sich in dem Bedienelement bildende Feuchtigkeitströpfchen ungehindert austreten können.

Des Weiteren ist es möglich, einzelne Bedienfunktionen voneinander zu trennen, so dass sowohl mit dem linken als auch mit dem rechten Fahrradgriff jeweils ein Bedienelement verbunden ist. Hierbei kann beispielsweise ein Wippenschalter zur Steuerung des Motors am rechten Fahrradgriff und ein Tastschalter zum Auswählen unterschiedlicher Modi etc. am linken Fahrradgriff angeordnet sein.

Des Weiteren kann in das Bedienelement ein Display integriert sein oder mit dem Bedienelement ein Display verbunden sein, wobei es sich hierbei beispielsweise um den Fahrradcomputer handeln kann. Über ein derartiges Display kann der Akkuladezustand des elektrischen Unterstützungsmotors, die gewählte Unterstützungsstufe, etc. angezeigt werden.

Das Bedienelement ist vorzugsweise über eines oder mehrere Kabel unmittelbar oder mittelbar mit dem elektrischen Unterstützungsmotor bzw. einem Steuermodul des Motors verbunden. Ebenso kann eine elektrische Verbindung mit einem Fahrradcomputer bzw. einer Halterung des Fahrradcomputers erfolgen. Generell ist es möglich, anstatt einer kabelgebundenen Kommunikation auch eine drahtlose Kommunikation zu realisieren. Hierzu kann in das Bedienelement ein Sender und gegebenenfalls auch ein Empfänger integriert werden. Des Weiteren kann hierzu in das Bedienelement ein Batteriefach oder dergleichen integriert werden.

Die einzelnen vorstehend beschriebenen, voneinander unabhängigen Erfindungen sowie die Merkmale der einzelnen Erfindungen sind in besonders bevorzugter Weise miteinander kombiniert, um einen ergonomischen Fahrradgriff auszugestalten.

Wenngleich die einzelnen vorstehend beschriebenen Ausführungsformen selbständige Erfindungen darstellen, ist es besonders bevorzugt, diese miteinander zu kombinieren.

Nachfolgend werden die unterschiedlichen Ausführungsformen, die ggf. selbständige Erfindungen darstellen, anhand bevorzugter Ausführungsformen beschrieben, wobei in den Zeichnungen einige der unabhängigen Erfindungen in den dargestellten Ausführungsformen miteinander kombiniert sind.

Es zeigen:
- Fig. 1: eine schematische Draufsicht einer bevorzugten Ausführungsform des erfindungsgemäßen Fahrradgriffsystems,
- Fig. 2: eine schematische Seitenansicht eines Bedienelements mit Wippenschalter,
- Fig. 3: eine schematische Seitenansicht eines Bedienelements mit Drehschalter,
- Fig. 4: eine schematische Seitenansicht eines Bedienelements mit Wippen- oder Drehschalter in einer weiteren bevorzugten Ausführungsform,
- Fig. 5: eine schematische Draufsicht einer weiteren bevorzugten Ausführungsform des Bedienelements,
- Fig. 6: eine schematische Draufsicht eines Fahrradgriffs zusammen mit einem Bedienelement,
- Fig. 7: eine schematische Draufsicht des Lagerelements,
- Fig. 8: eine schematische Seitenansicht des Lagerelements in Richtung des Pfeils VII in Fig. 7, und
- Fig. 9: eine schematische Schnittansicht des Bedienelements sowie des Lagerelements entlang der Linie IX - IX in Fig. 6.

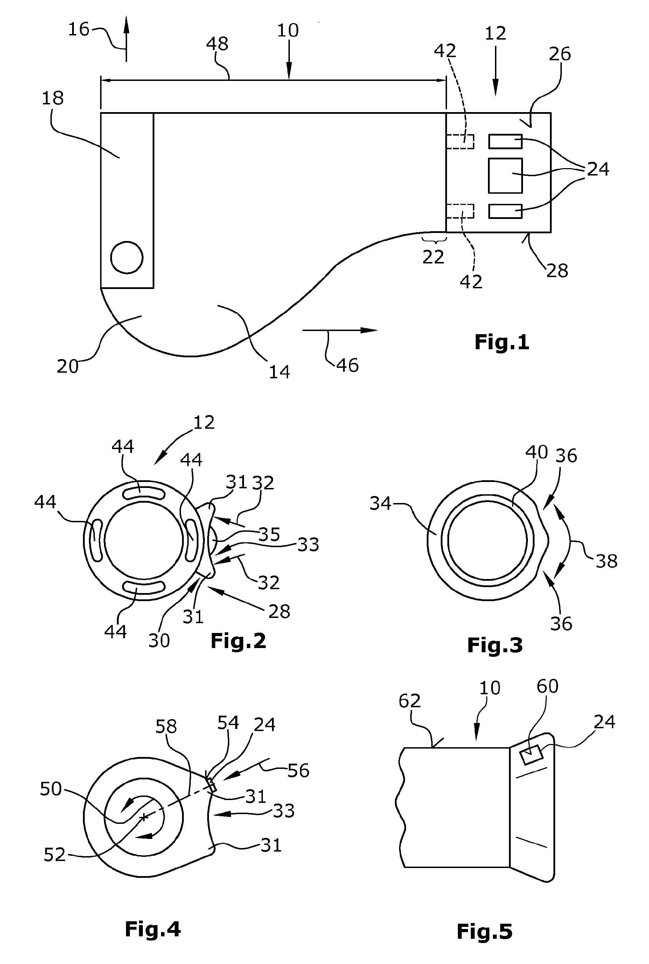

Das erfindungsgemäße Fahrradgriffsystem weist ein an einem nicht dargestellten Fahrradlenker befestigbares Griffelement 10 sowie ein Bedienelement 12 auf. Das Bedienelement 12 ist seitlich neben dem Griffelement 10 angeordnet und grenzt unmittelbar an das Griffelement 10. In dem in Fig. 1 dargestellten Ausführungsbeispiel handelt es sich um einen linken Fahrradgriff, so dass das Bedienelement 12 auf der rechten Seite des Griffelements 10 angeordnet ist. Das Griffelement 10 hat gegenüber herkömmlichen Griffen eine verkürzte Griffbreite 48 von vorzugsweise weniger als 100 mm.

Im dargestellten Ausführungsbeispiel handelt es sich um ein ergonomisch ausgestaltetes Griffelement 10. Dieses weist einen flügelförmigen als Abstützelement 14 dienenden Ansatz auf. Das Abstützelement 14 dient zum Abstützen des Handtellers, wobei das Abstützelement 14 auf den Körper des Radfahrers zuweist bzw. entgegen einer Fahrtrichtung 16 angeordnet ist. Insbesondere um ein Verdrehen des Griffelements 10 zu vermeiden, ist es bevorzugt, das Griffelement 10 über ein schellenartiges Klemmelement 18 am Fahrradlenker klemmend zu befestigen. Die Befestigung kann hierbei beispielsweise wie in EP 1 537 014 und EP 1 712 460 beschrieben, erfolgen. Es sind jedoch auch andere formschlüssige und/ oder kraftschlüssige Verbindungen zwischen dem Klemmelement 18 und dem Griffelement 10 denkbar. Eine weitere bevorzugte Ausgestaltung des Griffelements 10 besteht darin, dass das Abstützelement 14 in ein Halteelement 20 übergeht. Das Halteelement 20 ragt in den Bereich des Klemmelements 18 hinein, so dass ein möglichst stufenfreier, glatter Übergang zwischen dem Griffelement einschließlich des Abstützelements 14 und des Halteteils 20 zu der Klemmeinrichtung 18 gewährleistet ist. Hierdurch kann ein ergonomisches Greifen des Griffelements in unterschiedlichen Stellungen realisiert werden.

Das Bedienelement 12, bei dem es im dargestellten Ausführungsbeispiel um ein im Wesentlichen zylindrisches Bedienelement handelt, weist einen äußeren Querschnitt auf, der dem äußeren Querschnitt des angrenzenden Bereichs 22 des Griffelements entspricht. Somit ist auch ein stufenloser Übergang zwischen dem Bereich 22 des Griffelements 10 und dem Bedienelement 12 gewährleistet.

Im dargestellten Ausführungsbeispiel weist das Bedienelement 12 gemäß Fig. 1, drei Taster 24 auf. Diese sind vorzugsweise derart ausgebildet, dass eine Oberseite der Taster 24 nicht oder nur geringfügig über eine Außenseite 26 des Bedienelements 12 vorsteht, um ein einfaches ergonomisches Bedienen zu ermöglichen.

Besonders bevorzugt ist es, dass die Taster 24 an einer auf den Benutzer zuweisenden Rückseite 28 des Bedienelements vorgesehen sind. Insbesondere die häufig verwendeten Taster zur Steuerung des Elektromotors sind vorzugsweise auf der Rückseite 28 des Bedienelements angeordnet. Dies hat den Vorteil, dass die Taster von dem Daumen des Benutzers auf einfache Weise betätigt werden können. Beim Vorsehen eines ergonomischen Fahrradgriffs mit Abstützelement 14 ist das Abstützelement 14 üblicherweise im Wesentlichen horizontal ausgerichtet. Dies führt dazu, dass der Daumen des Benutzers durch eine einfache Schwenkbewegung im Daumengrundgelenk zu den Tasten gedreht werden kann, ohne dass ein Umgreifen erfolgen muss. Ferner handelt es sich hierbei um eine ergonomische Handstellung.

In einer weiteren bevorzugten Ausführungsform des Bedienelements 12 (Fig. 2) ist insbesondere an einer Rückseite 28 ein Wippenschalter 30 angeordnet. Wie durch die Pfeile 32 angedeutet, können durch den Wippenschalter 30 zwei Schaltpositionen realisiert werden. Das Vorsehen eines Wippenschalters 30 an der Rückseite 28 des Bedienelements 12 ist insbesondere vorteilhaft, da dieses auf einfache Weise durch den Daumen betätigt werden kann. Dies hat den Vorteil, dass die Hand zumindest nicht vollständig von dem Griffelement 10 gelöst werden muss, so dass beispielsweise auch in schwierigen Fahrsituationen ein Steuern des Elektromotors möglich ist. Dies ist beispielsweise beim Bergauffahren vorteilhaft, da beim Bergauffahren einerseits ein festes Greifen des Lenkers erforderlich ist und andererseits ein kurzfristiges Erhöhen der Unterstützung durch den Elektromotor wünschenswert ist. Eine Anordnung des Wippenschalters 30 an der Rückseite 28 des Bedienelements 12 ist insbesondere in Verbindung mit einem ergonomischen Griffelement 10 mit Abstützelement 14 vorteilhaft.

Der Wippenschalter 30 weist im dargestellten Ausführungsbeispiel zwei Wippenstege 31 auf. Zum Betätigen des Wippenschalters 30 kann der Daumen in einer zwischen den beiden Wippenstegen 31 ausgebildeten Schaltmulde 33 angeordnet werden. Es ist des Weiteren bevorzugt, innerhalb der Schaltmulde 33 einen Tastschalter 35 vorzusehen. Hierdurch ist es möglich auf einfache Weise drei Schaltfunktionen zu realisieren, ohne die Lage des Daumens verändern zu müssen.
Anstelle eines Wippenschalters 30 kann mit ähnlicher Funktionsweise ein Drehschalter 34 (Fig. 3) vorgesehen sein. Der Drehschalter 34 weist im dargestellten Ausführungsbeispiel zwei Schaltmulden 36 auf. Über die Schaltmulden 36 ist ein Drehen des Drehschalters 34 in Richtung des Pfeils 38 mit Hilfe des Daumens auf einfache Weise möglich. Der Drehschalter 34 kann auf einer Hülse 40 angeordnet sein, um ein einfaches Drehen zu ermöglichen.

Des Weiteren ist es möglich zur genauen Lagedefinition zwischen dem Griffelement 10 und dem Bedienelement 12 Positionselemente 42, 44 vorzusehen. Als Positionselemente sind in dem dargestellten Ausführungsbeispiel teilringförmige Ansätze bzw. Pins 42 (Fig. 1) mit dem Griffelement 10 verbunden. Die Ansätze 42 verlaufen in Längsrichtung des Griffelements und ragen in teilringförmige Öffnungen 44 (Fig. 2). Insbesondere durch Vorsehen derartiger Positionselemente 42, 44 ist eine exakte Positionierung des Bedienelements 12 relativ zum dem Griffelement 10 möglich. Dies ist insbesondere bei der Verwendung ergonomischer Griffe, wie beispielsweise in Fig. 1 dargestellt, zweckmäßig, da somit eine relative Lagedefinition des Abstützelements 14 zu dem Bedienelement 12, insbesondere dem Schaltelement des Bedienelements 12 möglich ist.

Bei einer weiteren bevorzugten Ausführungsform (Fig. 4) die eine selbständige, insbesondere von der Griffbreite unabhängige Erfindung darstellt, sind wiederum ähnliche oder identische Elemente mit denselben Bezugszeichen gekennzeichnet. Die Besonderheit dieser Ausführungsform besteht darin, dass es sich um einen eine Griffmulde 33 und zwei Wippenstege 31 aufweisenden Wippen- oder Drehschalter handelt. Zum Betätigen wird ein Daumen in die Griffmulde 33 gelegt und der Daumen nach oben oder unten bewegt, so dass eine Drehung in Richtung eines Pfeils 50 erfolgt, wobei die Drehung im dargestellten Ausführungsbeispiel um den Mittelpunkt bzw. eine Längsachse 52 des Fahrradgriffs erfolgt. Insbesondere bei einem Wippenschalter kann die Drehachse auch in einem Abstand zur Längsachse 52 verlaufen. An einer Oberseite 54 des in Fig. 4 oberen Wippenstegs 31 ist ein Betätigungselement 24 angeordnet. Die Betätigung erfolgt durch Drücken in Richtung eines Pfeils 56, wobei die Betätigungsrichtung, wie durch die Linie 58 verdeutlicht, in radialer Richtung verläuft. Hierdurch ist sichergestellt, dass beim Betätigen dieses elektrischen Schalters 24 kein Drehen bzw. Schwenken des Drehwippenschalters in Richtung des Pfeils 50 erfolgt.

Bei einer weiteren unabhängigen Erfindung (Fig. 5), die insbesondere unabhängig von der Griffbreite ist, ist eine Betätigungsoberfläche 60 eines elektrischen Schalters 24, insbesondere zu einer Oberseite 62 des Griffelements 10 geneigt angeordnet. Bevorzugt ist es hierbei, dass das gesamte Bedienelement 12 eine geneigte, insbesondere konisch ausgebildete, Oberfläche bzw. Form aufweist. Hierdurch ist die Zugänglichkeit des Schalters 24 vereinfacht und insbesondere die Ergonomie des gesamten Fahrradgriffsystems verbessert.

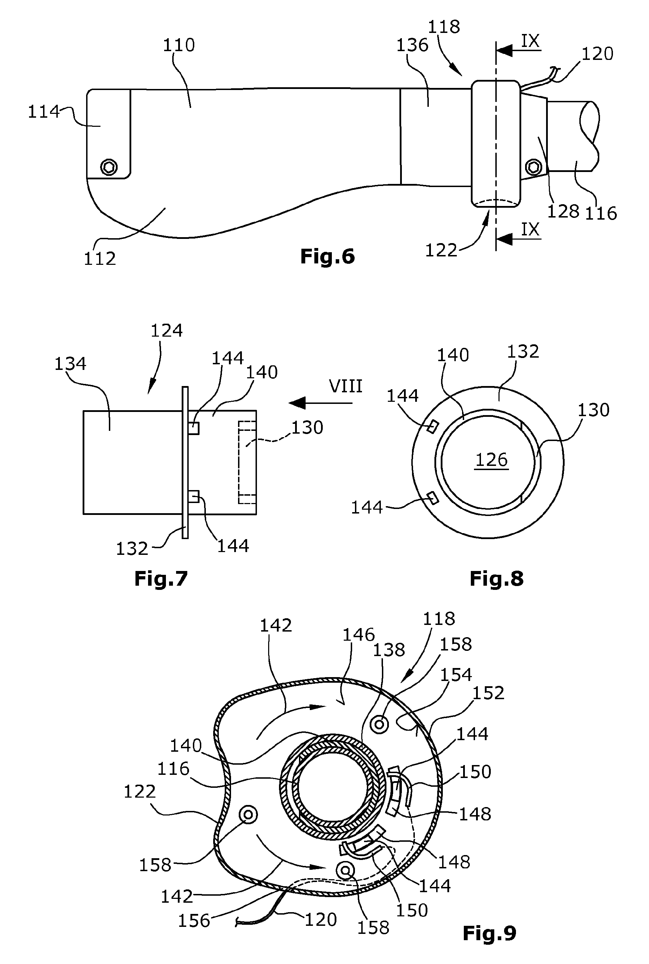

Bei einer bevorzugten Ausführungsform (Fig. 6) des erfindungsgemäßen Fahrradgriff-Systems ist ein Griffelement 110 vorgesehen. Das Griffelement 110 weist einen Ansatz 112 zum Aufstützen des Handtellers auf und ist über ein Klemmmittel 114 am Fahrradlenker befestigt. Ein derartiges Griffelement ist beispielsweise in EP 1 537 014 beschrieben. Die Führung des Griffelements an einem Lenker 116 erfolgt über das Klemmmittel 114. Auf einer bezogen auf das Griffelement 110 inneren Seite ist ein Betätigungselement 118 angeordnet. Das Betätigungselement 118 ist zumindest teilweise um den Lenker 116 herum verschwenk- bzw. verdrehbar. Hierdurch erfolgt ein Schalten eines elektrischen Schalters zur Steuerung eines über ein Kabel 120 mit dem Bedienelement verbundenen Unterstützungsmotors. Die Verbindung kann auch drahtlos erfolgen. Das Drehen des Betätigungselements 118 erfolgt in dem dargestellten Ausführungsbeispiel mit Hilfe eines in eine Schaltmulde 122 des Betätigungselements eingelegten Daumens und Bewegen des Daumens nach oben oder unten.

Das Betätigungselement 118 ist auf einem Lagerelement 124 (Fig. 7) angeordnet. Das Lagerelement 124 weist eine den Außendurchmesser des Lenkers 116 aufweisende zylindrische Öffnung 126 (Fig. 8) auf. Mit Hilfe eines als Klemme ausgebildeten Halteelements 128 (Fig. 6) in Zusammenwirkung mit einer Ausnehmung 130 in dem Lagerelement kann ein klemmendes Fixieren des Lagerrings auf dem Lenker 116 erfolgen. Auf einer in Fig. 2 rechten bzw. inneren Seite eines kreisringförmigen Anlagerings 132 ist das Betätigungselement 118 angeordnet. Ein gegenüberliegender zylindrischer Teil 134 des Lagerelements 124 ragt entweder unmittelbar in das Griffelement 110 oder ist teilweise von einem weiteren im Wesentlichen zylindrischen Griffteil 136 umgeben, so dass der zylindrische Ansatz 134 nur teilweise in das Griffelement 110 ragt. In dem zylindrischen Griffteil 136 können bspw. weitere Elektronikbauteile oder dgl. untergebracht sein.

Das Betätigungselement 118 weist im dargestellten Ausführungsbeispiel einen inneren zylindrischen, ein Gleitelement ausbildenden Ansatz 138 auf. Dieser umgibt den zylindrischen Ansatz 140 des Lagerelements 110, so dass ein Verdrehen bzw. Verschwenken des Bedienelements 118 auf dem zylindrischen Ansatz 140 des Lagerelements 124 entsprechend der Pfeile 142 möglich ist. Das Betätigen des Betätigungselements 118 erfolgt im dargestellten Ausführungsbeispiel mit Hilfe des Daumens, der in die Mulde 122 gelegt wird.

An dem kreisförmigen Anlagering 132 des Lagerelements 124 sind im dargestellten Ausführungsbeispiel zwei Schaltansätze 144 vorgesehen, die in das Betätigungselement 118 ragen. Hierzu sind in einer Seitenwand 146 des Betätigungselements 118 Schlitze 148 vorgesehen. Des Weiteren sind innerhalb des Betätigungselements 118 zwei elektrische Schaltelemente 150 angeordnet. Diese sind mit dem Kabel 120 verbunden. Die elektrischen Schaltelemente 150 sind in dem dargestellten Ausführungsbeispiel zwischen dem Gleitelement 138 und einer Außenwand 152 des Betätigungselements 118 angeordnet. Insbesondere sind die elektrischen Schaltelemente 150 an einer Innenseite 154 der Außenwand 152 befestigt. Das Betätigungselement 118 kann durch einen der Seitenwand 146 gegenüberliegenden, nicht dargestellten Deckel verschlossen werden.

Ein Verdrehen des Bedienelements 148 in Richtung eines der beiden Pfeile 142 bewirkt ein Verdrehen der mit dem Betätigungselement 118 verbundenen elektrischen Schaltelemente 150. Hierdurch gelangt eines der beiden elektrischen Schaltelemente 150 mit einem der beiden Schaltansätze 144 in Kontakt, wobei die Schaltansätze 144 aufgrund ihrer Verbindung mit dem Lagerelement 124 stationär sind. Hierdurch kann ein elektrischer Kontakt ausgelöst und ein entsprechendes Schaltsignal erzeugt werden.

An einem in montiertem Zustand unteren Bereich des Bedienelements 118 ist in der dargestellten bevorzugten Ausführungsform eine Feuchtigkeitsaustrittsöffnung 156 angeordnet.

Ferner weist das Bedienelement 18 in dem hohlen Innenbereich senkrecht zur Zeichenebene verlaufende zylindrische Ansätze 158 auf. Diese weisen eine Gewindebohrung zur Befestigung eines nicht dargestellten Deckels auf. Der Deckel weist eine Außenkontur entsprechend der Außenwand 52 auf, so dass beispielsweise zusammen mit einem umlaufenden Dichtelement Deckel über Schrauben in Fig. 9 von oben auf das Bedienelement 118 aufgesetzt und über die Schrauben an den Ansätzen 158 fixiert werden kann.

Wenngleich die einzelnen vorstehend anhand der Figuren beschriebenen Ausführungsformen selbständige Erfindungen darstellen, ist eine Kombination der einzelnen Ausführungsformen besonders bevorzugt, da hierdurch ein ergonomisches Griffsystem mit einer Vielzahl von Vorteilen realisierbar ist.

## Patentansprüche

1. Fahrradgriffsystem, mit
einem auf einem Fahrradlenker befestigbaren Griffelement (10, 110), und
einem in Längsrichtung (46) des Griffelements sich seitlich an das Griffelement (10, 110) anschließenden Bedienelement (12, 118),
wobei das Bedienelement (12, 118) mindestens einen elektrischen Schalter (24, 30, 34, 35, 122) zum Steuern eines elektrischen Unterstützungsmotors aufweist,
**dadurch gekennzeichnet, dass**
das Bedienelement ein auf einem Lagerelement (124) drehbar angeordnetes Betätigungselement (118) aufweist, das vorzugsweise als ringförmiger Drehschalter ausgebildet ist.

2. Fahrradgriffsystem nach Anspruch 1, **dadurch gekennzeichnet, dass** das Betätigungselement (118) mindestens eine Schaltmulde (122) aufweist.

3. Fahrradgriffsystem nach Anspruch 1 oder 2, **dadurch gekennzeichnet, dass** zumindest einer der elektrischen Schalter als Wippenschalter (30, 122) ausgebildet ist.

4. Fahrradgriffsystem nach Anspruch 3, **dadurch gekennzeichnet, dass** der Wippenschalter (30, 122) zwei Wippenstege (31) aufweist, zwischen denen eine Schaltmulde (33) ausgebildet ist, wobei vorzugsweise in der Schaltmulde (33) ein Tastschalter (35) angeordnet ist.

5. Fahrradgriffsystem nach einem der Ansprüche 1 bis 4, **dadurch gekennzeichnet, dass** zumindest ein elektrischer Schalter (24) an einer Oberseite (54) eines Wippenstegs (31) des Wippenschalters (30) bzw. an dem Drehschalter (34) angeordnet ist.

6. Fahrradgriffsystem nach einem der Ansprüche 1 bis 5, **dadurch gekennzeichnet, dass** der zumindest eine elektrische Schalter (24) eine Betätigungsrichtung (56) aufweist, deren Hauptkomponente radial zum Bedienelement (12) verläuft.

7. Fahrradgriffsystem nach Anspruch 5 oder 6, **dadurch gekennzeichnet, dass** der zumindest eine elektrische Schalter (24) eine in Richtung des Griffelements (10) geneigte Betätigungsoberfläche (60) aufweist.

8. Fahrradgriffsystem nach einem der Ansprüche 1 bis 7, **dadurch gekennzeichnet, dass** zumindest einer der Schalter derart in das Bedienelement (12) integriert ist, dass eine Außenseite des Schalters (24) im Wesentlichen stufenlos zur Außenseite (26) des Bedienelements ist.

9. Fahrradgriffsystem nach einem der Ansprüche 1 bis 8, **dadurch gekennzeichnet, dass** mindestens einer der Schalter (24, 30, 34), insbesondere ein Hauptfunktionsschalter an einer Rückseite (28) des Bedienelements (12) angeordnet ist.

10. Fahrradgriffsystem nach einem der Ansprüche 1 bis 9, **dadurch gekennzeichnet, dass** insbesondere die gesamte Steuerelektronik des Unterstützungsmotors in dem Bedienelement (12) integriert ist.

11. Fahrradgriffsystem nach einem der Ansprüche 1 bis 10, **dadurch gekennzeichnet, dass** in dem Bedienelement (12) ein Sende-/ Empfangselement zur drahtlosen Datenübertragung vorgesehen ist.

12. Fahrradgriffsystem nach einem der Ansprüche 1 bis 11, **dadurch gekennzeichnet, dass** das Bedienelement bzw. das Betätigungselement (118) ein insbesondere hohl ausgebildetes Gehäuse aufweist, das von einem insbesondere lösbar befestigten Gehäusedeckel verschlossen ist.

13. Fahrradgriffsystem nach einem der Ansprüche 1 bis 12, **dadurch gekennzeichnet, dass** das Bedienelement bzw. das Betätigungselement (118) insbesondere in einem in montiertem Zustand unteren Bereich eine Öffnung (156) zum Feuchtigkeitsaustritt aufweist.

14. Fahrradgriffsystem nach einem der Ansprüche 1 bis 13, **dadurch gekennzeichnet, dass** das Greifelement (10, 110) eine sich in Längsrichtung (46) erstreckende Griffbreite (48) aufweist, die kleiner als 110 mm, insbesondere kleiner als 100 mm und vorzugsweise kleiner als 90 mm ist.

15. Fahrradgriffsystem nach einem der Ansprüche 1 bis 14, **dadurch gekennzeichnet, dass** ein äußerer, vorzugsweise im Wesentlichen zylindrischer Querschnitt des Bedienelements (12, 118) und ein äußerer Querschnitt des Griffelements (10, 110) in aneinander grenzenden Bereichen im Wesentlichen gleich ist.
